(19) Europäisches Patentamt
European Patent Office
Office européen des brevets

(11) **EP 4 170 289 B1**

(12) **EUROPÄISCHE PATENTSCHRIFT**

(45) Veröffentlichungstag und Bekanntmachung des Hinweises auf die Patenterteilung:
**13.09.2023   Patentblatt 2023/37**

(21) Anmeldenummer: **21204416.8**

(22) Anmeldetag: **25.10.2021**

(51) Internationale Patentklassifikation (IPC):
*G01D 5/20* *(2006.01)*

(52) Gemeinsame Patentklassifikation (CPC):
**G01D 5/2046**; G01D 5/2452

(54) **INDUKTIVE WINKELMESSEINRICHTUNG**

INDUCTIVE ANGLE MEASURING DEVICE

DISPOSITIF INDUCTIF DE MESURE D'ANGLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.04.2023   Patentblatt 2023/17**

(60) Teilanmeldung:
**22206018.8 / 4 174 443**

(73) Patentinhaber: **Dr. Johannes Heidenhain GmbH 83301 Traunreut (DE)**

(72) Erfinder:
• **TIEMANN, Marc Oliver**
**83329 Waging am See (DE)**
• **HEUMANN, Martin**
**83278 Traunstein (DE)**
• **FRANK, Alexander**
**83278 Traunstein (DE)**

(56) Entgegenhaltungen:
EP-A1- 3 611 478         DE-A1- 19 803 249
DE-A1-102013 218 768     US-A1- 2011 025 310

**Beschreibung**

## GEBIET DER TECHNIK

Die Erfindung betrifft eine induktive Winkelmesseinrichtung zur Bestimmung einer absoluten Winkelstellungsinformation beziehungsweise einer absoluten Winkelposition gemäß dem Anspruch 1.

Induktive Winkelmesseinrichtungen werden beispielsweise als Winkelmessgeräte zur Bestimmung der Winkelposition zweier relativ zueinander drehbarer Maschinenteile verwendet. Bei induktiven Winkelmesseinrichtungen sind häufig Erregerleitungen und Empfängerleiterbahnen auf einer gemeinsamen meist mehrlagigen Leiterplatte aufgebracht, die beispielsweise mit einem Stator eines Winkelmessgeräts fest verbunden ist. Dieser Leiterplatte gegenüber befindet sich ein Skalenelement, auf dem Teilungsstrukturen aufgebracht sind, und welches mit dem Rotor des Winkelmessgeräts drehfest verbunden ist. Wenn an den Erregerleitungen ein zeitlich wechselnder elektrischer Erregerstrom angelegt wird, werden in den Empfängerleiterbahnen während der Relativdrehung zwischen Rotor und Stator von der Winkelposition abhängige Signale erzeugt. Diese Signale werden dann in einer Auswerteelektronik weiterverarbeitet. Zur Erzeugung einer absoluten Winkelstellungsinformation sind auf dem Skalenelement häufig zwei oder mehr Spuren mit Teilungsstrukturen vorgesehen, die unterschiedliche Teilungsperioden aufweisen und nach dem Nonius- oder Schwebungs-Prinzip ausgewertet werden.

Häufig werden derartige induktive Winkelmesseinrichtungen als Messgeräte für elektrische Antriebe, zur Bestimmung der Relativbewegung beziehungsweise der Relativlage von entsprechenden Maschinenteilen eingesetzt. In diesem Fall werden die erzeugten Winkelpositionswerte einer Folgeelektronik zur Ansteuerung der Antriebe über eine entsprechende Schnittstellenanordnung zugeführt.

## STAND DER TECHNIK

In der DE 10 2013 218 768 A1 der Anmelderin wird eine induktive Positionsmesseinrichtung beschrieben, bei der eine Verkippung einer Abtasteinheit um eine Achse parallel zur Drehachse gegenüber einem Maßstab mit Hilfe einer zusätzlichen Teilungsspur ermittelt werden kann. Der so ermittelte Moiré-Winkel kann in einer Auswerteeinrichtung zur Korrektur der Abtastsignale beziehungsweise der Absolutposition verwendet werden.

## ZUSAMMENFASSUNG DER ERFINDUNG

Der Erfindung liegt die Aufgabe zugrunde eine induktive Winkelmesseinrichtung zu schaffen, durch die eine genaue Bestimmung einer absoluten Winkelstellung zwischen zwei zueinander drehbarer Maschinenteile ermöglicht wird.

Diese Aufgabe wird erfindungsgemäß durch die Merkmale des Anspruches 1 gelöst.

Dementsprechend weist die induktive Winkelmesseinrichtung ein Abtastelement und ein Skalenelement auf. Das Skalenelement umfasst eine erste Teilungsspur mit ersten Teilungsstrukturen, eine zweite Teilungsspur mit zweiten Teilungsstrukturen und eine dritte Teilungsspur mit dritten Teilungsstrukturen, wobei die Teilungsstrukturen jeweils periodisch angeordnet sind. Jeweils über einen gleich großen vorbestimmten beziehungsweise vorgegebenen konstanten Winkelbereich hinweg weist die erste Teilungsspur eine erste Anzahl $n1$ von Teilungsstrukturen auf und die dritte Teilungsspur eine dritte Anzahl $n3$ von Teilungsstrukturen, wobei die erste Anzahl $n1$ gleich der dritten Anzahl $n3$ ist ($n1 = n3$). Dagegen weist die zweite Teilungsspur über den vorbestimmten gleich großen Winkelbereich hinweg eine von der ersten Anzahl $n1$ beziehungsweise von der dritten Anzahl $n3$ unterschiedliche zweite Anzahl $n2$ von Teilungsstrukturen auf ($n1 = n3 \neq n2$). Weiterhin sind die Teilungsspuren konzentrisch so um eine Achse umlaufend angeordnet, dass die erste Teilungsspur radial innen, die zweite Teilungsspur radial zwischen der ersten Teilungsspur und der dritten Teilungsspur und die dritte Teilungsspur radial außen angeordnet ist. Das Abtastelement weist eine Erregerleitung auf. Zudem weist das Abtastelement eine erste Empfängerleiterbahn, eine zweite Empfängerleiterbahn und eine dritte Empfängerleiterbahn auf. Die erste Teilungsspur ist zur Erzeugung eines ersten Signals, das eine winkelbezogene erste Signalperiode aufweist, durch die erste Empfängerleiterbahn abtastbar. Die zweite Teilungsspur ist zur Erzeugung eines zweiten Signals mit einer winkelbezogenen zweiten Signalperiode durch die zweite Empfängerleiterbahn abtastbar und die dritte Teilungsspur ist zur Erzeugung eines dritten Signals mit einer winkelbezogenen dritten Signalperiode durch die dritte Empfängerleiterbahn abtastbar. Die erste Signalperiode ist winkelbezogen gleich groß wie die dritte Signalperiode. Aus dem ersten Signal und dem dritten Signal ist ein Gesamtsignal erzeugbar, das zur Bestimmung einer absoluten Winkelstellungsinformation mit dem zweiten Signal kombinierbar ist.

Üblicherweise weist das Skalenelement Teilungsspuren auf, die sich über volle 360° erstrecken, so dass sich also in den meisten Fällen der vorbestimmte Winkelbereich über 360° erstreckt. Es sind jedoch auch Winkelmesseinrichtungen bekannt, die dazu dienen lediglich begrenzte Schwenkpositionen zu messen. In diesem Fall kann der vorbestimmte Winkelbereich angepasst an den Schwenkbereich kleiner als 360° sein. Die erste, zweite und dritte Anzahl $n1$, $n2$, $n3$ von Teilungsstrukturen kann als eine auf einen Winkelbereich normierte Anzahl $n1$, $n2$, $n3$ gesehen werden.

Die Empfängerleiterbahnen weisen vorzugsweise entlang eines Kreisbogens einen sinusförmigen räumlich periodischen Verlauf auf mit einer Periode, die auf die Periodenlänge der abzutastenden Teilungsstrukturen abgestimmt ist.

Üblicherweise sind das Abtastelement und das Skalenelement axial einander gegenüber liegend angeordnet und durch einen Luftspalt, der sich in axialer Richtung erstreckt, voneinander beabstandet.

Erfindungsgemäß weisen die erste Teilungsspur eine erste radiale Ausdehnung H1 und die dritte Teilungsspur eine dritte radiale Ausdehnung H3 auf, wobei die erste radiale Ausdehnung H1 größer ist als die dritte radiale Ausdehnung H3 (H1 > H3). Eine radiale Ausdehnung H3 ist eine Länge, z.B. gemessen in Millimetern, in radialer Richtung.

Vorteilhafterweise ist die erste Teilungsspur in Umfangsrichtung mit einem Phasenversatz relativ zur dritten Teilungsspur angeordnet, der größer ist als 150° und kleiner als 210°. Insbesondere kann der Phasenversatz in einem Bereich zwischen 170° und 190° liegen. Mit anderen Worten sind bezüglich der Umfangs- beziehungsweise Messrichtung die erste und die dritte Teilungsspur (insbesondere deren Teilungsstrukturen) so relativ zueinander angeordnet, dass die ersten und dritten Signale einen elektrischen Phasenversatz im Bereich zwischen 150° und 210°, mit Vorteil zwischen 170° und 190°, aufweisen.

In weiterer Ausgestaltung der Erfindung weist die Winkelmesseinrichtung eine analoge elektrische Schaltung auf, durch die das Gesamtsignal durch Verknüpfung beziehungsweise Verschaltung des ersten und des dritten Signals erzeugbar ist.

Das erste Signal und das dritte Signal sind so miteinander verknüpft, dass daraus das Gesamtsignal entsteht. Das Gesamtsignal wird insbesondere durch eine Subtraktions- beziehungsweise Additionsoperation erzeugt.

Mit Vorteil weist die Winkelmesseinrichtung eine weitere Schaltung auf, durch welche die absolute Winkelstellungsinformation aus dem Gesamtsignal und dem zweiten Signal durch ein Nonius-Verfahren erzeugbar ist. Insbesondere kann die weitere Schaltung als eine digitale Schaltung ausgestaltet sein.

In weiterer Ausgestaltung der Erfindung umfasst das Abtastelement eine radial innen liegende erste Abtastspur und eine radial außen liegende dritte Abtastspur, wobei die erste Abtastspur die erste Empfängerleiterbahn sowie zumindest einen Abschnitt der Erregerleitung umfasst, der mit einem wirksamen ersten radialen Abstand zur ersten Empfängerleiterbahn angeordnet ist. Der zumindest eine Abschnitt verläuft also radial versetzt zur der ersten Empfängerleiterbahn mit dem wirksamen ersten radialen Abstand. Die dritte Abtastspur umfasst die dritte Empfängerleiterbahn sowie zumindest einen weiteren Abschnitt der Erregerleitung, der mit einem wirksamen dritten radialen Abstand zur dritten Empfängerleiterbahn angeordnet ist. Dabei ist der erste radiale Abstand größer als der dritte radiale Abstand. Vorzugsweise können die Erregerleitungen in Messrichtung beziehungsweise in den Abschnitten entlang der Messrichtung verlaufen.

Mit Vorteil ist die zweite Signalperiode größer als die erste Signalperiode und größer als die dritte Signalperiode.

Häufig sind die Abtastspuren so ausgestaltet, dass diese mehrere Empfängerleiterbahnen aufweisen, wobei mit Vorteil zwei Empfängerleiterbahnen einer Abtastspur einen Phasenversatz insbesondere von 90° zueinander aufweisen.

Die Winkelmesseinrichtung umfasst weiterhin eine elektronische Schaltung, durch welche in den Erregerleitungen ein elektrischer Erregerstrom erzeugbar ist. Mit Vorteil verläuft zu einem bestimmten Zeitpunkt der Erregerstrom in unmittelbar benachbarten Abschnitten der Erregerleitungen in gleicher Richtung.

In weiterer Ausgestaltung der Erfindung ist das Skalenelement so ausgestaltet, dass die erste Teilungsspur entlang eines ersten Kreisbogens verläuft und eine erste radiale Mittellinie mit einem ersten Radius r1' aufweist. Weiterhin verläuft die zweite Teilungsspur entlang eines zweiten Kreisbogens und weist eine zweite radiale Mittellinie mit einem zweiten Radius r2' auf. Schließlich verläuft die dritte Teilungsspur entlang eines dritten Kreisbogens und weist eine dritte radiale Mittellinie mit einem dritten Radius r3' auf. Das Skalenelement ist dann so ausgebildet, dass der Abstand zwischen der ersten radialen Mittellinie und der zweiten radialen Mittellinie ungleich dem Abstand zwischen der dritten radialen Mittellinie und der zweiten radialen Mittellinie ist (r2' - r1') ≠ (r3' - r2'). Insbesondere ist der Abstand zwischen der ersten radialen Mittellinie und der zweiten radialen Mittellinie kleiner als der Abstand zwischen der dritten radialen Mittellinie und der zweiten radialen Mittellinie (r2' - r1') < (r3'-r2').

Das Abtastelement ist so ausgestaltet, dass durch dieses das Skalenelement nicht über volle 360°, sondern zum Zeitpunkt der Abtastung nur über ein Segment oder über mehrere in Umfangsrichtung versetzt angeordnete derartige Segmente abtastbar ist.

Dabei erstreckt sich das Segment oder die jeweiligen mehreren Segmente über einen Winkel, der kleiner als 180°, insbesondere kleiner als 120° ist, mit Vorteil kleiner als 90°. Insbesondere erstecken sich sowohl die erste Empfängerleiterbahn, die zweite Empfängerleiterbahn und die dritte Empfängerleiterbahn über einen Winkel der kleiner als 180°, insbesondere kleiner als 120° ist, mit Vorteil kleiner als 90°.

In weiterer Ausgestaltung der Erfindung weist die erste Empfängerleiterbahn eine winkelbezogene erste Periode auf, die zweite Empfängerleiterbahn eine winkelbezogene zweite Periode und die dritte Empfängerleiterbahn eine winkelbezogene dritte Periode Die erste Periode ist winkelbezogen gleich der dritten Periode beziehungsweise genauso groß wie die dritte Periode.

Vorteilhafte Ausbildungen der Erfindung entnimmt man den abhängigen Ansprüchen.

Weitere Einzelheiten und Vorteile der erfindungsgemäßen induktiven Winkelmesseinrichtung ergeben sich aus der nachfolgenden Beschreibung zweier Ausführungsbeispiele anhand der beiliegenden Figuren.

## KURZE BESCHREIBUNG DER ZEICHNUNGEN

| Figur 1 | eine perspektivische Ansicht der Winkelmesseinrichtung in einer Explosionsdarstellung, |
| --- | --- |
| Figur 2 | eine Draufsicht auf ein Abtastelement, |
| Figur 3 | eine Detailansicht auf das Abtastelement, |
| Figur 4 | eine Draufsicht auf ein Skalenelement gemäß einem ersten Ausführungsbeispiel, |
| Figur 5 | eine Detailansicht auf das Skalenelement gemäß dem ersten Ausführungsbeispiel, |
| Figur 6 | eine perspektivische Ansicht der Winkelmesseinrichtung im zusammengebauten Zustand, |
| Figur 7 | ein Diagramm mit den Verläufen eines ersten und eines dritten Signals sowie eines Gesamtsignals |
| Figur 8 | ein Diagramm mit dem Verlauf eines zweiten Signals, |
| Figur 9 | eine Draufsicht auf ein Skalenelement gemäß einem zweiten Ausführungsbeispiel, |
| Figur 10 | eine Detailansicht auf das Skalenelement gemäß dem zweiten Ausführungsbeispiel. |

## BESCHREIBUNG DER AUSFÜHRUNGSFORMEN

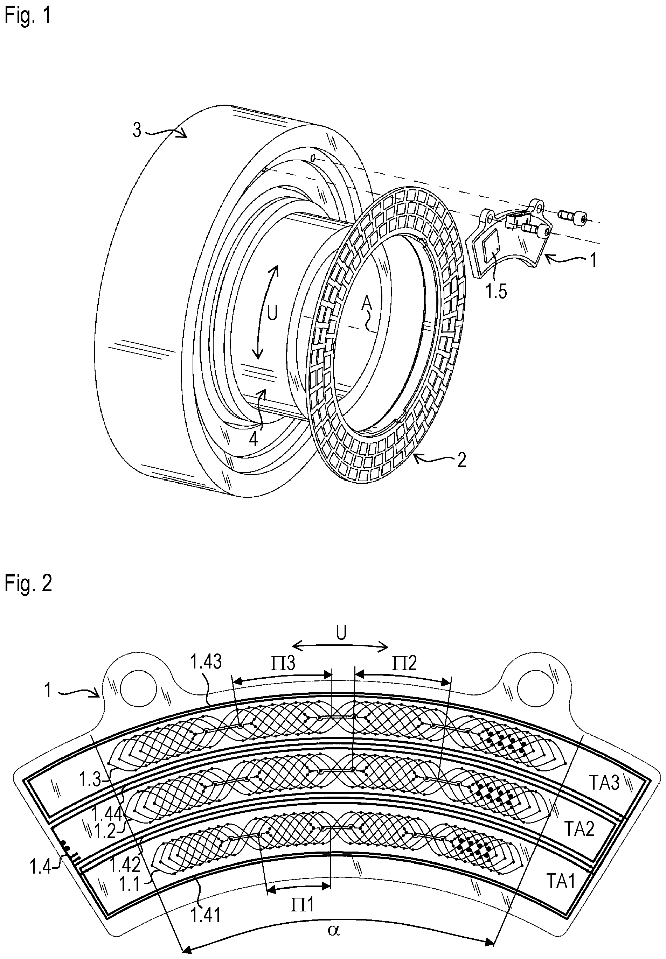

Die Erfindung wird anhand einer Winkelmesseinrichtung gemäß der Figur 1 beschrieben. Die Winkelmesseinrichtung umfasst ein Abtastelement 1, das an einem Gehäuse 3 befestigbar ist sowie ein Skalenelement 2 beziehungsweise eine Skala. Das Skalenelement 2 kann drehfest mit einer relativ zum Gehäuse um eine Achse A drehbaren Welle 4 verbunden werden. Die Winkelmesseinrichtung ist zur Erfassung einer absoluten Winkelposition in Umfangsrichtung, die einer Messrichtung U entspricht, zwischen dem Abtastelement 1 und dem Skalenelement 2 bestimmt.

Das Abtastelement 1 ist als eine Leiterplatte, welche mehrere Lagen aufweist, ausgeführt und dient zur Abtastung des Skalenelements 2. Das in der Figur 2 gezeigte Abtastelement 1 weist unter anderem eine Erregerleitung 1.4, die im vorgestellten Ausführungsbeispiel als eine mit mehreren Windungen umlaufende Leiterbahn ausgestaltet ist, auf. Weiterhin weist das Abtastelement 1 eine radial innen liegende erste Abtastspur TA1 auf. Diese Abtastspur TA1 umfasst erste Empfängerleiterbahnen 1.1 sowie zwei Abschnitte 1.41, 1.42 der Erregerleitung 1.4. Die zwei Abschnitte 1.41, 1.42 verlaufen radial beidseitig der ersten Empfängerleiterbahnen 1.1. Zudem weist das Abtastelement 1 eine zweite Abtastspur TA2 auf und zwei Abschnitte 1.42, 1.44 der Erregerleitung 1.4, wobei die zwei Abschnitte 1.42, 1.44 radial beidseitig von zweiten Empfängerleiterbahnen 1.2 verlaufen. Schließlich weist das Abtastelement 1 eine radial außen liegende dritte Abtastspur TA3 auf, welche dritte Empfängerleiterbahnen 1.3 sowie zwei Abschnitte 1.43, 1.44 der Erregerleitung 1.4 umfasst, wobei die zwei Abschnitte 1.43, 1.44 radial beidseitig der dritten Empfängerleiterbahnen 1.3 verlaufen. Die Empfängerleiterbahnen 1.1, 1.2, 1.3 einer jeden Abtastspur TA1, TA2, TA3 verlaufen auf unterschiedlichen Ebenen mit Durchkontaktierungen, so dass an Kreuzungspunkten unerwünschte Kurzschlüsse vermieden werden. Im gezeigten Ausführungsbeispiel sind mehrere Lagen in dem Leiterplattenaufbau vorgesehen. Die Empfängerleiterbahnen 1.1, 1.2, 1.3 jeder Abtastspur TA1, TA2, TA3 weisen einen räumlich periodischen Verlauf auf, der im Wesentlichen sinusförmig beziehungsweise sinusartig ausgestaltet ist. Dabei verläuft die Abszisse der zugehörigen Sinus-Linien entlang einer Kreislinie um die Achse A. Im Folgenden werden Längengrößen in Umfangs- beziehungsweise Messrichtung U durch Winkelmaße angegeben. Die ersten Empfängerleiterbahnen 1.1 weisen entsprechend eine winkelbezogene erste Periode $\Pi1$ auf, wobei im vorgestellten Ausführungsbeispiel in Abstimmung mit den Gegebenheiten des Skalenelements 2 gilt:

$$\Pi1 = 9{,}00°$$

Die zweiten Empfängerleiterbahnen 1.2 weisen eine winkelbezogene zweite Periode $\Pi2$ auf, die sich von der ersten Periode $\Pi1$ unterscheidet, wobei gilt:

$$\Pi2 = 9{,}23° \neq \Pi1$$

$$\Pi2 > \Pi1$$

Dagegen weisen die dritten Empfängerleiterbahnen 1.3 eine winkelbezogene dritte Periode $\Pi3$ auf, die der ersten Periode $\Pi1$ entspricht:

$$\Pi3 = \Pi1 = 9{,}00°$$

Im vorgestellten Ausführungsbeispiel durchläuft jede der Empfängerleiterbahnen 1.1, 1.2, 1.3 vier volle (Sinus-) Perioden $\Pi1$, $\Pi2$, $\Pi3$. Innerhalb ihrer Abtastspur TA1, TA2, TA3 sind die Empfängerleiterbahnen 1.1, 1.2, 1.3 jeweils relativ zueinander entlang der Messrichtung U versetzt. Hier sind in Umfangsrichtung U benachbarte Empfängerleiterbahnen 1.1, 1.2, 1.3 innerhalb ihrer Abtastspur TA1, TA2, TA3 um 1/8 der Perioden Π1, Π2, Π3 zueinander versetzt angeordnet. Die Empfängerleiterbahnen 1.1, 1.2, 1.3 in jeder Abtastspur TA1, TA2, TA3 sind elektrisch so verschaltet, dass diese letztlich für jede Abtastspur TA1, TA2, TA3 jeweils um 90° phasenversetzte Signale liefern können. Die Empfängerleiterbahnen 1.1, 1.2, 1.3 sind im vorgestellten Ausführungsbeispiel jeweils durch Lücken unterbrochen. Diese Bauweise kann bekanntermaßen dazu beitragen die Empfindlichkeit gegenüber einer relativen Verkippung um eine Achse mit radialer Orientierung (Nick-Verkippung) zu reduzieren.

Das Abtastelement ist so ausgestaltet, dass durch dieses das Skalenelement über ein Segment abtastbar ist, das sich nur über einen Winkel α erstreckt, der im vorgestellten Ausführungsbeispiel etwa 45° beträgt.

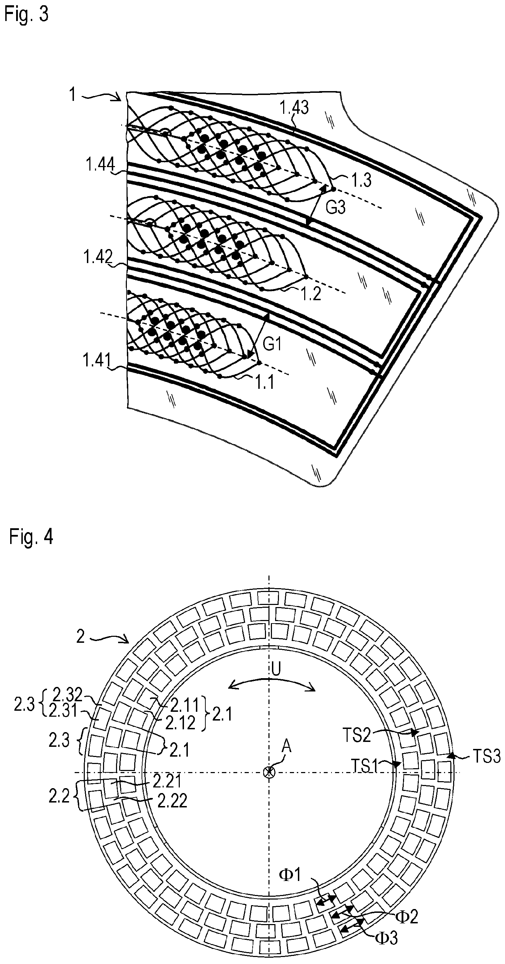

In der Figur 3 ist das Abtastelement 1 in einer vergrößerten Detailansicht zu sehen. Die gestrichelten Linien stellen die radialen Mitten der Empfängerleiterbahnen 1.1, 1.2, 1.3 dar also die Abszisse der entsprechenden Sinus-Linien um die Achse A, wobei die Abszisse entlang einer Kreislinie verläuft. Die Abschnitte 1.41, 1.42, 1.43, 1.44 der Erregerleitung 1.4 können eine Leiterbahn, oder wie im vorgestellten Ausführungsbeispiel mehrere Leiterbahnen, aufweisen

In der Figur 4 ist das Skalenelement 2 in einer Draufsicht gezeigt. Das Skalenelement 2 besteht aus einem Substrat, welches im dargestellten Ausführungsbeispiel aus Epoxydharz hergestellt ist und auf welchem drei Teilungsspuren TS1, TS2, TS3 angeordnet sind. Die Teilungsspuren TS1, TS2, TS3 sind kreisförmig ausgebildet und bezüglich der Drehachse A konzentrisch mit unterschiedlichen Radien verlaufend in Messrichtung U umlaufend auf dem Substrat angeordnet. Dabei ist die erste Teilungsspur TS1 radial innen, die zweite Teilungsspur TS2 radial zwischen der ersten Teilungsspur TS1 und der dritten Teilungsspur TS3 und die dritte Teilungsspur TS3 radial außen angeordnet.

Die Teilungsspuren TS1, TS2, TS3 bestehen jeweils aus einer periodischen Abfolge von Teilungsstrukturen 2.1, 2.2, 2.3 die im vorgestellten Ausführungsbeispiel als elektrisch leitfähige Teilungsbereichen 2.11, 2.21, 2.31 ausgestaltet sind, zwischen denen nichtleitfähige Teilungsbereiche 2.12, 2.22, 2.32 angeordnet sind. Als Material für die elektrisch leitfähigen Teilungsbereiche 2.11, 2.21, 2.31 wurde im gezeigten Beispiel Kupfer auf das Substrat aufgebracht. In den nichtleitfähigen Teilungsbereichen 2.12, 2.22, 2.32 zwischen den leitfähigen Teilungsbereichen 2.11, 2.21, 2.31 wurde das Substrat dagegen nicht beschichtet.

Insgesamt umfasst die erste Teilungsspur TS1 eine erste Anzahl n1 von vierzig periodisch angeordneten ersten Teilungsstrukturen 2.1 mit ebenso vielen dazwischen angeordneten nichtleitfähigen Bereichen über einen Winkelbereich von 360° beziehungsweise 2π hinweg. Die dritte Teilungsspur TS3 umfasst eine gleich große dritte Anzahl n3 periodisch angeordneter dritter Teilungsstrukturen 2.3. Somit gilt:

$$n1 = n3 = 40$$

Dagegen weist die zweite Teilungsspur TS2 über die 360° hinweg eine zweite Anzahl n2 von neununddreißig periodisch angeordneten zweiten Teilungsstrukturen 2.2 auf:

$$n2 = 39$$

Weiterhin weist somit die zweite Teilungsspur TS2 über den Winkelbereich von 360° hinweg eine von der ersten Anzahl n1 beziehungsweise von der dritten Anzahl n3 unterschiedliche zweite Anzahl n2 von Teilungsstrukturen 2.2 auf, insbesondere gilt auch:

$$n2 < n1 \text{ und } n2 < n3$$

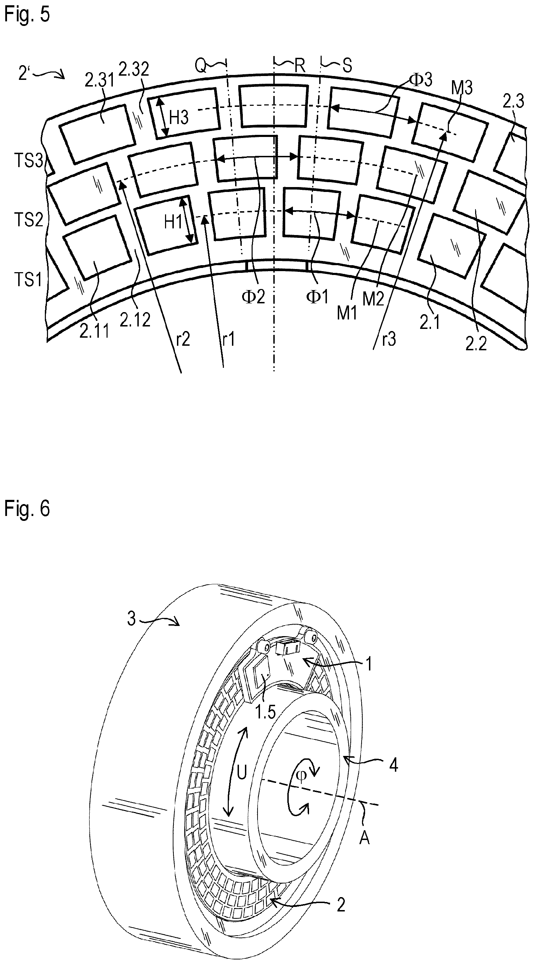

In der Figur 5 ist eine Detailansicht des Skalenelements 2 gezeigt. Darin ist ersichtlich, dass eine erste radiale Mittellinie M1 der ersten Teilungsspur TS1 entlang eines Kreisbogens mit dem Radius r1 verläuft. Entsprechend verlaufen die radialen Mittellinien M2, M3 der zweiten Teilungsspur TS2 und der dritten Teilungsspur TS3 entlang von Kreisbögen mit den Radien r2 beziehungsweise r3. Im vorgestellten Ausführungsbeispiel sind die Teilungsspuren TS1, TS2, TS3 jeweils in gleicher Distanz voneinander angeordnet.

Wie aus der Figur 5 ebenso ersichtlich, erstreckt sich jede der ersten Teilungsstrukturen 2.1 über einen ersten Winkelbereich Φ1, der im vorgestellten Ausführungsbeispiel 9,00° (360°/n1) beträgt. Entsprechend erstreckt sich jede der zweiten Teilungsstrukturen 2.2 über einen zweiten Winkelbereich Φ2, hier 9,23° (360°/n2). Schließlich beträgt ein dritter Winkelbereich Φ3 über den sich jeweils die dritten Teilungsstrukturen 2.3 erstrecken wiederum 9,00° (360°/n3). Da jedoch der erste Radius r1 kleiner ist als der dritte Radius r3, ist die Teilungsperiode in Millimetern gemessen in der ersten Teilungsspur TS1 kürzer als in der dritten Teilungsspur TS3.

Die erste Teilungsspur TS1 ist bezüglich der Messrichtung U relativ zu der dritten Teilungsspur TS3 so angeordnet, dass die Mitten der leitfähigen Teilungsbereiche 2.11 der ersten Teilungsspur TS1 und die Mitten der nichtleitfähigen Teilungsbereiche 2.32 der dritten Teilungsspur TS3 auf radial ausgerichteten Linien Q, S zu liegen kommen, die um den ersten Winkelbereich Φ1 versetzt zueinander angeordnet sind. Zudem kommen die Mitten der nichtleitfähigen Teilungsbereiche 2.12 der ersten Teilungsspur TS1 und die Mitten der leitfähigen Teilungsbereiche 2.31 auf einer radial ausgerichteten Linie R zu liegen. Die Linie R ist mittig zwischen den Linien Q, S angeordnet, also jeweils im Abstand ½·Φ1. Infolgedessen ist die erste Teilungsspur TS1 in Umfangsrichtung mit einem Phasenversatz von 180° relativ zur dritten Teilungsspur TS3 angeordnet.

Weiterhin weisen die erste Teilungsspur TS1 beziehungsweise deren leitfähige Teilungsbereiche 2.11 eine erste radiale Ausdehnung H1 auf, die im vorgestellten Ausführungsbeispiel 4,8 mm beträgt. Die dritte Teilungsspur TS3 beziehungsweise deren leitfähige Teilungsbereiche 2.31 weist eine dritte radiale Ausdehnung H3 auf, hier 4,09 mm. Dementsprechend ist also die erste radiale Ausdehnung H1 größer als die dritte radiale Ausdehnung H3, so dass gilt:

$$H1 > H3.$$

Im zusammengebauten Zustand gemäß der Figur 6 stehen sich das Abtastelement 1 und das Skalenelement 2 axial gegenüber, so dass die Achse A durch die Mittelpunkte beider Elemente verläuft. Bei einer Relativdrehung zwischen dem Skalenelement 2 und dem Abtastelement 1 ist in den Empfängerleiterbahnen 1.1, 1.2, 1.3 ein von der jeweiligen Winkelposition abhängiges erstes, zweites und drittes Signal S1, S2, S3 durch Induktionseffekte erzeugbar. Voraussetzung für die Bildung von entsprechenden Signalen S1, S2, S3 ist, dass die Erregerleitung 1.4 ein zeitlich wechselndes elektromagnetisches Erregerfeld im Bereich der abgetasteten Teilungsspuren TS1, TS2, TS3 erzeugt. Im dargestellten Ausführungsbeispiel ist die Erregerleitung 1.4 als eine planar-parallele stromdurchflossene Leiterbahn mit mehreren Windungen ausgebildet. Das Abtastelement 1 weist eine elektronische Schaltung, die beispielsweise einen ASIC-Baustein 1.5 (Figuren 1 und 6) umfasst, auf. Diese elektronische Schaltung des Abtastelements 1 arbeitet nicht nur als Auswerteelement, sondern auch als Erregerkontrollelement, unter dessen Kontrolle der Erregerstrom erzeugt wird, welcher dann durch die Erregerleitung 1.4 fließt.

Wird die Erregerleitung 1.4 von einem Erregerstrom durchflossen, so bildet sich um die Erregerleitung 1.4 ein schlauch- bzw. zylinderförmig orientiertes elektromagnetisches Feld aus. Die Feldlinien des so erzeugten elektromagnetischen Feldes verlaufen in Form konzentrischer Kreise um die Erregerleitungen 1.4, wobei die Richtung der Feldlinien in bekannter Art und Weise von der Stromrichtung in den Erregerleitungen 1.4 abhängt. Die Stromrichtung der an eine gemeinsame Empfängerleiterbahn 1.1, 1.2, 1.3 angrenzenden Abschnitte 1.41, 1.42, 1.43, 1.44 der Erregerleitung 1.4 ist dabei so zu wählen, dass die Feldlinien im Bereich der Empfängerleiterbahnen 1.1, 1.2, 1.3 jeweils die gewünschte Orientierung aufweisen. Wenn wie im vorgestellten Ausführungsbeispiel mehrere Abschnitte 1.41, 1.42, 1.43, 1.44 der Erregerleitung 1.4 nebeneinander parallel verlaufen, hat dies eine vergleichbare Wirkung wie wenn eine einzige Erregerleitung mit entsprechend größerem Querschnitt von einem größeren Strom durchflossen werden würde.

Für die Funktionsweise der Winkelmesseinrichtung, insbesondere für die Höhe der empfangen Pegel der ersten und dritten Signale S1, S3, ist es bedeutsam wie groß ein erster wirksamer radialer Abstand G1 beziehungsweise ein dritter wirksamer radialer Abstand G3 innerhalb der ersten Abtastspur TA1 beziehungsweise dritten Abtastspur TA3 ist (Figur 3). Der erste radiale Abstand G1 für die erste Abtastspur TA1 ist der Abstand zwischen der radialen Mitte der ersten Empfängerleiterbahn 1.1 und der radialen Mitte des Abschnittes 1.42 (beziehungsweise des Abschnittes 1.41) der Erregerleitung 1.4. Für den Sonderfall, dass die Erregerleitung 1.4 im betreffenden Abschnitt nur aus einer Leiterbahn bestehen würde, wäre die radiale Mitte dieser Leiterbahn maßgeblich. Im vorgestellten Ausführungsbeispiel umfasst ein Abschnitt 1.41, 1.42, 1.43, 1.44 stets mehrere parallel verlaufende Leiterbahnen, so dass hier die Mitte der mehreren parallel verlaufenden Leiterbahnen als radiale Mitte der Abschnitte 1.41, 1.42, 1.43, 1.44 zu sehen ist. Entscheidend für die Festlegung der wirksamen radialen Abstände G1, G3 ist jedenfalls die örtliche Wirksamkeit der Erregerleitung 1.4. Zu berücksichtigen ist in diesem Zusammenhang, dass mehrere Leiterbahnen nach dem Superpositionsprinzip zusammen ein Magnetfeld erzeugen. Demnach ist der wirksame radiale Abstand G1, G3 der Abstand zwischen der radialen Mitte der Empfängerleiterbahnen 1.1, 1.3 und der Mitte einer virtuellen Leiterbahn, die das gleiche Magnetfeld erzeugen würde wie ein Leiterbahnbündel der gleichen Abtastspur TA1, TA3. Entsprechend kann auch der dritte wirksame radiale Abstand G3 für die dritte Abtastspur TA3 festgelegt werden.

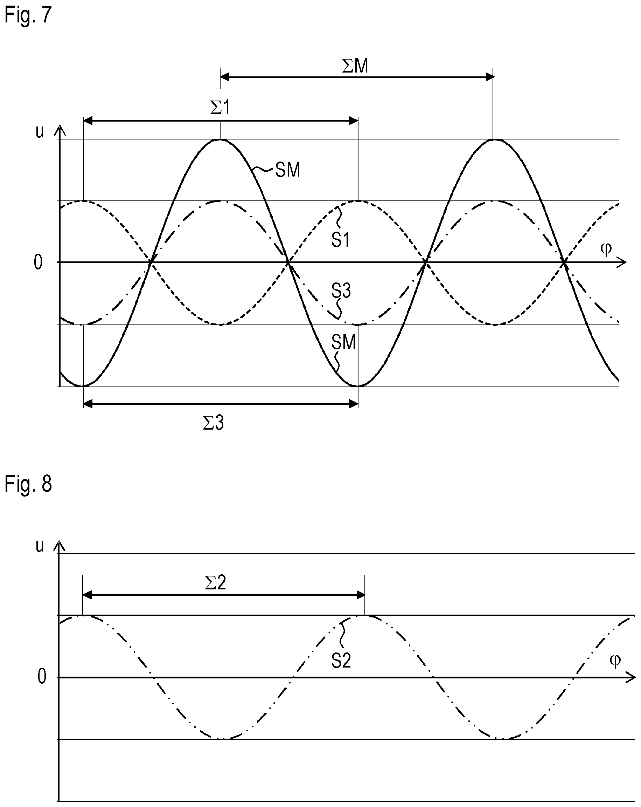

Durch den Erregerstrom werden in den Empfängerleiterbahnen 1.1, 1.2, 1.3 Spannungen in Abhängigkeit von der Winkelstellung des Skalenelements 2 induziert, wobei diese Spannungen hier als erste, zweite und dritte Signale S1, S2, S3 bezeichnet werden. In den Figuren 7 und 8 sind Diagramme gezeigt, bei denen auf der Abszisse der Winkel φ (siehe Figur 6) und auf der Ordinate die Signalpegel u aufgetragen sind. Die Diagramme in den Figuren 7 und 8 zeigen jeweils die Verhältnisse, bei denen der Kipp- beziehungsweise Moiré-Winkel gleich Null ist, also ideale Einbauverhältnisse.

In der Figur 7 stellt die gestrichelte Linie den Verlauf des ersten Signals S1 dar, das durch die erste Empfängerleiterbahn 1.1 der ersten Abtastspur TA1 generiert wird, wenn diese die erste Teilungsspur TS1 abtastet. Entsprechend stellt die Strich-Punkt-Linie den Verlauf des dritten Signals S3 dar, das durch die dritte Empfängerleiterbahn 1.3 der dritten Abtastspur TA3 generiert wird, wenn diese die dritte Teilungsspur TS3 abtastet. Durch die Ausgestaltung der ersten Teilungsspur TS1 und der dritten Teilungsspur TS3 und deren relative Anordnung (insbesondere der Teilungsstrukturen 2.1, 2.3) zueinander weist das erste Signal S1 einen Phasenversatz von 180° relativ zum dritten Signal S3 auf. Weiterhin weist das erste Signal S1 eine, bezogen auf den Winkel φ, erste Signalperiode Σ1 auf. Ebenso weist das dritte Signal S3 eine winkelbezogene dritte Signalperiode Σ3 auf, die durch die dritte Empfängerleiterbahn 1.3 erzeugt werden kann. Die erste Signalperiode Σ1 ist genau so groß wie die dritte Signalperiode Σ3:

$$\Sigma 1 = \Sigma 3$$

Aus dem ersten Signal S1 und dem dritten Signal S3 ist ein Gesamtsignal SM (SM = S3 - S1) erzeugbar. Zu diesem Zweck werden die ersten Signale S1 der ersten Abtastspur TA1, insbesondere der ersten Empfängerleiterbahn 1.1, mit dem dritten Signal S3 der dritten Abtastspur TA3, insbesondere der dritten Empfängerleiterbahn 1.3, so verschaltet, dass durch eine derartige Verknüpfung ein Gesamtsignal SM entsteht. Im vorgestellten Ausführungsbeispiel wird dies durch eine einfache analoge Schaltung auf dem Abtastelement 1 realisiert, wobei durch die Verknüpfung eine Differenzbildung vorgenommen wird, so dass hier das Gesamtsignal SM auch als Differenzsignal bezeichnet werden könnte . Durch den Phasenversatz von 180° haben störende Anteile, z.B. durch Übersprecheffekte, oder durch Signaloberwellen entgegengesetzte Vorzeichen und werden somit eliminiert oder zumindest reduziert. Wichtig ist jedenfalls, dass die ersten und dritten Signale S1, S3 phasengleich kombiniert, insbesondere subtrahiert, werden. Das Gesamtsignal SM weist eine Signalperiode ΣM auf, die gleich groß ist wie die erste Signalperiode Σ1 oder die dritte Signalperiode Σ3:

$$\Sigma M = \Sigma 1 = \Sigma 3$$

Moiré-Fehler entstehen durch eine Verkippung des Abtastelements 1 gegenüber dem Skalenelement 2 um eine Kippachse, die eine zur Achse A parallele Komponente aufweist. Im Falle einer Verkippung des Abtastelements 1 relativ zum Skalenelement 2 im Sinne einer Moiré-Bewegung verschiebt sich der Verlauf des ersten Signals S1 entlang der Abszisse und der Verlauf des dritten Signals S3 entsprechend gegenläufig. Das Gesamtsignal SM bleibt weitgehend unverändert trotz dieser geometrischen Abweichung von der Idealkonfiguration. Das so erzeugte Gesamtsignal SM, insbesondere dessen Phasenlage, ist daher nahezu unabhängig von toleranzbedingten Moiré-Fehlern. Eine derartige Verkippung würde bei konventionellen Winkelmesseinrichtungen dazu führen, dass zwischen dem Feinspursignal und dem Grobspursignal eine Phasendifferenz entstünde, welche zu einer inkorrekten Kombination der beiden Signale führen würde beziehungsweise zu einer fehlerhaften Anschlussbildung. Dadurch würde letztlich eine falsche Winkelstellungsinformation entstehen.
Die Vermeidung von Moiré-Fehlern ist im vorgestellten Ausführungsbeispiel insbesondere von Bedeutung, weil das Abtastelement 1 so ausgestaltet ist, dass durch dieses das Skalenelement 2 nur über einen begrenzten Winkel also über ein Segment abtastbar ist und nicht über den vollen Umfang. Bei einer Abtastung, die sich über den vollen Umfang erstreckt, würde sich ein Moiré-Fehler weitgehend von selbst kompensieren.
Bei einer Änderung des axialen Luftspaltes zwischen dem Abtastelement 1 und dem Skalenelement 2, z. B. infolge einer Erwärmung etwa der Welle 4, würde sich ohne besondere Maßnahmen das Abstandsverhalten der ersten Abtastspur TA1 im Vergleich zum Abstandsverhalten der dritten Abtastspur TA3 unterscheiden. Dieser Effekt würde die Moiré-Fehler-Reduzierung behindern. Um diesen unerwünschten Effekt zu minimieren, ist der wirksame erste radiale Abstand G1 größer als der wirksame dritte radiale Abstand G3:

$$G1 > G3$$

Durch diese Bauweise ist der Einfluss von Abstandsänderungen auf die jeweiligen Amplituden beziehungsweise Signalpegel harmonisiert. In dieser Hinsicht unterstützend wirkt auch die oben beschriebene Bauweise, wonach auf der Seite des Skalenelements 2 die erste radiale Ausdehnung H1 größer ist als die zweite radiale Ausdehnung H3.
Durch die ersten Empfängerleiterbahnen 1.1 und die dritten Empfängerleiterbahnen 1.3 sind höher aufgelöste Winkelpositionswerte für die relative Winkelposition erzeugbar, während durch die zweiten Empfängerleiterbahnen 1.2 weniger hoch aufgelöste Winkelpositionswerte erzeugbar sind. Folglich ist die zweite Signalperiode Σ2 des zweiten Signal S2 (siehe Figur 8) größer als die erste Signalperiode Σ1 oder die dritte Signalperiode Σ3.

$$\Sigma 2 > \Sigma 1, \ \Sigma 2 > \Sigma 3$$

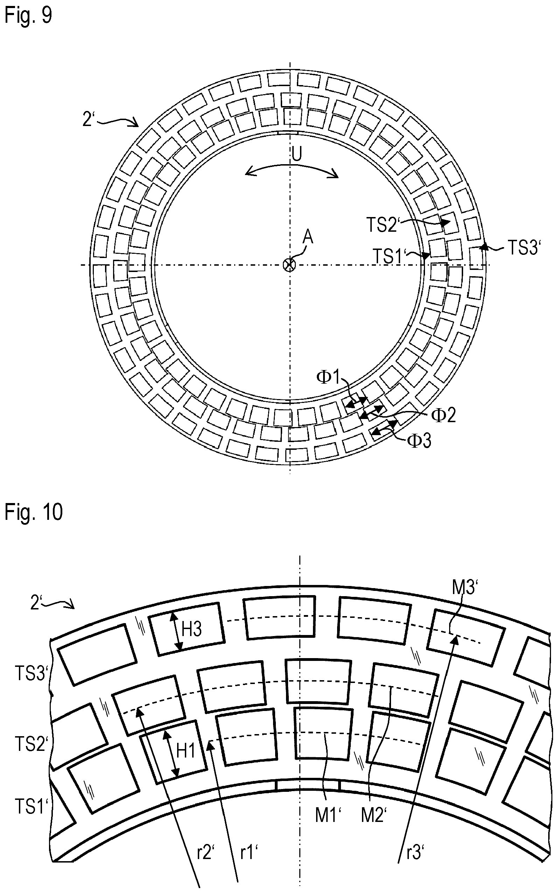

Das weitgehend Moiré-Fehler-freie Gesamtsignal SM kann also als ein virtuelles Feinspur-Signal gesehen werden, welches zur Bestimmung einer absoluten Winkelstellungsinformation mit dem winkelmäßig gröberen zweiten Signal S2 kombiniert werden kann. Im vorgestellten Ausführungsbeispiel wird hierzu eine digitale Berechnung im ASIC 1.5 mit Hilfe eines Nonius- oder Schwebungsverfahrens vorgenommen.
Durch die derart ausgestaltete Winkelmesseinrichtung kann so eine absolute Winkelstellungsinformation erzeugt werden, die weitgehend frei ist von Moiré-Fehlern und damit erhöhte Messgenauigkeiten gewährleistet, auch wenn das Abtastelement 1 das Skalenelement 2 nur über ein vergleichsweise kurzes Segment abtastet und vergleichsweise große Anbautoleranzen zugelassen werden können.
Anhand der Figuren 9 und 10 wird eine weitere Ausführungsform (zweites Ausführungsbeispiel) der Erfindung beschrieben. Diese unterscheidet sich vom ersten Ausführungsbeispiel im Wesentlichen dadurch, dass das Skalenelement 2' so ausgestaltet ist, dass die innen liegende erste Teilungsspur TS1' näher an der zweiten Teilungsspur TS2' angeordnet ist als die äußerste dritte Teilungsspur TS3'. Entsprechend verläuft die erste Teilungsspur TS1' entlang eines ersten Kreisbogens und weist eine erste radiale Mittellinie M1' mit einem ersten Radius r1' auf. Die zweite Teilungsspur TS2' verläuft entlang eines zweiten Kreisbogens und weist eine zweite radiale Mittellinie M2' mit einem zweiten Radius r2' auf. Schließlich verläuft die dritte Teilungsspur TS3' entlang eines dritten Kreisbogens und weist eine dritte radiale Mittellinie M3' mit einem dritten Radius r3' auf. Demgemäß gilt:

$$(r2' - r1') \neq (r3' - r2')$$

Insbesondere gilt:

$$(r2' - r1') < (r3' - r2')$$

Ansonsten ist das Skalenelement 2' gemäß dem zweiten Ausführungsbeispiel weitgehend identisch ausgestaltet im Vergleich zum Skalenelement 2 des ersten Ausführungsbeispiels. Die Radien der Abtastspuren des Abtastelements sind im zweiten Ausführungsbeispiel den Radien r1', r2', r3' beziehungsweise den Verläufen der Teilungsspuren TS1', TS2', TS3' angepasst.

**Patentansprüche**

1.  Induktive Winkelmesseinrichtung, die ein Abtastelement (1) und ein Skalenelement (2; 2') aufweist, wobei

    das Skalenelement (2; 2')

        - eine erste Teilungsspur (TS1; TS1') mit ersten Teilungsstrukturen (2.1), die periodisch angeordnet sind,
        - eine zweite Teilungsspur (TS2; TS2') mit zweiten Teilungsstrukturen (2.2), die periodisch angeordnet sind, und
        - eine dritte Teilungsspur (TS3; TS3') mit dritten Teilungsstrukturen (2.3), die periodisch angeordnet sind, umfasst, wobei

            ¬ über einen vorbestimmten Winkelbereich hinweg die erste Teilungsspur (TS1; TS1') und die dritte Teilungsspur (TS3; TS3') eine gleiche erste Anzahl (n1, n3) von Teilungsstrukturen (2.1, 2.3) aufweisen, während die zweite Teilungsspur (TS2; TS2') eine von der ersten Anzahl (n1, n3) unterschiedliche zweite Anzahl (n2) von Teilungsstrukturen (2.2) aufweist,
¬ die Teilungsspuren (TS1, TS2, TS3; TS1', TS2', TS3') konzentrisch um eine Achse (A) umlaufend angeordnet sind, so dass die erste Teilungsspur (TS1; TS1') radial innen, die zweite Teilungsspur (TS2; TS2') radial zwischen der ersten Teilungsspur (TS1; TS1') und der dritten Teilungsspur (TS3; TS3') und die dritte Teilungsspur (TS3; TS3') radial außen angeordnet ist,

    das Abtastelement (1)

        - eine Erregerleitung (1.4) und
        - eine erste Empfängerleiterbahn (1.1),
        - eine zweite Empfängerleiterbahn (1.2) und
        - eine dritte Empfängerleiterbahn (1.3) aufweist, wobei

            ¬ die erste Teilungsspur (TS1; TS1') zur Erzeugung eines ersten Signals (S1) mit einer winkelbezogenen ersten Signalperiode ($\Sigma$1) durch die erste Empfängerleiterbahn (1.1),
            ¬ die zweite Teilungsspur (TS2; TS2') zur Erzeugung eines zweiten Signals (S2) mit einer winkelbezogenen zweiten Signalperiode ($\Sigma$2) durch die zweite Empfängerleiterbahn (1.2), und
            ¬ die dritte Teilungsspur (TS3; TS3') zur Erzeugung eines dritten Signals (S3) mit einer winkelbezogenen dritten Signalperiode ($\Sigma$3) durch die dritte Empfängerleiterbahn (1.3) abtastbar ist, wobei

    die erste Teilungsspur (TS1; TS1') eine erste radiale Ausdehnung (H1) und die dritte Teilungsspur (TS3; TS3') eine dritte radiale Ausdehnung (H3) aufweisen, wobei die erste radiale Ausdehnung (H1) größer ist als die dritte radiale Ausdehnung (H3) und
    die erste Signalperiode ($\Sigma$1) gleich der dritten Signalperiode ($\Sigma$3) ist und aus dem ersten Signal (S1) und dem dritten Signal (S3) ein Gesamtsignal (SM) erzeugbar ist, das mit dem zweiten Signal (S2) kombinierbar ist zur Bestimmung einer absoluten Winkelstellungsinformation.

2.  Induktive Winkelmesseinrichtung gemäß dem vorhergehenden Anspruch, wobei die erste Teilungsspur (TS1; TS1') in Umfangsrichtung mit einem Phasenversatz größer 150° und kleiner 210° relativ zur dritten Teilungsspur (TS3; TS3') angeordnet ist.

**3.** Induktive Winkelmesseinrichtung gemäß einem der vorhergehenden Ansprüche, wobei die Winkelmesseinrichtung eine analoge Schaltung aufweist, durch die das Gesamtsignal (SM) durch Verknüpfung des ersten und des dritten Signals (S1, S3) erzeugbar ist.

**4.** Induktive Winkelmesseinrichtung gemäß einem der vorhergehenden Ansprüche, wobei zur Bildung des Gesamtsignals (SM) das erste Signal (S1) und das dritte Signal (S3) durch eine Additions- oder Subtraktionsoperation miteinander verknüpft sind.

**5.** Induktive Winkelmesseinrichtung gemäß einem der vorhergehenden Ansprüche, wobei die Winkelmesseinrichtung eine weitere Schaltung aufweist, durch welche absolute Winkelstellungsinformation aus dem Gesamtsignal (SM) und dem zweiten Signal (S2) durch ein Nonius-Verfahren erzeugbar ist.

**6.** Induktive Winkelmesseinrichtung gemäß dem Anspruch 5, wobei die weitere Schaltung als eine digitale Schaltung ausgestaltet ist.

**7.** Induktive Winkelmesseinrichtung gemäß einem der vorhergehenden Ansprüche, wobei das Abtastelement (1) eine radial innen liegende erste Abtastspur (TA1) und eine radial außen liegende dritte Abtastspur (TA3) umfasst, wobei

die erste Abtastspur (TA1)

- die erste Empfängerleiterbahn (1.1), sowie
- zumindest einen Abschnitt (1.41, 1.42) der Erregerleitung (1.4) umfasst, der mit einem wirksamen ersten radialen Abstand (G1) zur ersten Empfängerleiterbahn (1.1) angeordnet ist, und

die dritte Abtastspur (TA3)

- die dritte Empfängerleiterbahn (1.3), sowie
- zumindest einen Abschnitt (1.43, 1.44) der Erregerleitung (1.4) umfasst, der mit einem wirksamen dritten radialen Abstand (G3) zur dritten Empfängerleiterbahn (1.3) angeordnet ist, wobei der erste wirksame radiale Abstand (G1) größer ist als der dritte wirksame radiale Abstand (G3).

**8.** Induktive Winkelmesseinrichtung gemäß einem der vorhergehenden Ansprüche, wobei die zweite Signalperiode ($\Sigma 2$) größer ist als die erste Signalperiode ($\Sigma 1$) beziehungsweise die dritte Signalperiode ($\Sigma 3$).

**9.** Induktive Winkelmesseinrichtung gemäß einem der vorhergehenden Ansprüche, wobei das Skalenelement (2') so ausgestaltet ist, dass die

- erste Teilungsspur (TS1') entlang eines ersten Kreisbogens verläuft und eine erste radiale Mittellinie (M1') mit einem ersten Radius (r1') aufweist,
- die zweite Teilungsspur (TS2') entlang eines zweiten Kreisbogens verläuft und eine zweite radiale Mittellinie (M2') mit einem zweiten Radius (r2') aufweist und
- die dritte Teilungsspur (TS3') entlang eines dritten Kreisbogens verläuft und eine dritte radiale Mittellinie (M3') mit einem dritten Radius (r3') aufweist, wobei gilt:

$$(r2' - r1') \neq (r3' - r2').$$

**10.** Induktive Winkelmesseinrichtung gemäß dem Anspruch 9, wobei gilt:

$$(r2' - r1') < (r3' - r2').$$

**11.** Induktive Winkelmesseinrichtung gemäß einem der vorhergehenden Ansprüche, wobei das Abtastelement (1) so ausgestaltet ist, dass durch dieses das Skalenelement (2; 2') nur über zumindest ein Segment abtastbar ist.

**12.** Induktive Winkelmesseinrichtung gemäß dem Anspruch 11, wobei sich das zumindest eine Segment über einen Winkel ($\alpha$) erstreckt, der kleiner als 180°, insbesondere kleiner als 120° ist.

**13.** Induktive Winkelmesseinrichtung gemäß einem der vorhergehenden Ansprüche, wobei die erste Empfängerleiterbahn (1.1) eine winkelbezogene erste Periode ($\Pi 1$) aufweist und die dritte Empfängerleiterbahn (1.3) eine winkelbezogene dritte Periode ($\Pi 3$) aufweist, wobei das Abtastelement (1) so ausgestaltet ist, dass die erste Periode ($\Pi 1$) gleich der dritten Periode ($\Pi 3$) ist.

**14.** Induktive Winkelmesseinrichtung gemäß dem Anspruch 13, wobei die zweite Empfängerleiterbahn (1.2) eine winkelbezogene zweite Periode ($\Pi 2$) aufweist, wobei das Abtastelement (1) so ausgestaltet ist, dass die zweite Periode ($\Pi 2$) größer ist als die erste Periode ($\Pi 1$).

**Claims**

**1.** Inductive angle measuring device which has a scanning element (1) and a scale element (2; 2'), wherein the scale element (2; 2') comprises

- a first graduation track (TS1; TS1') with first graduation structures (2.1) which are arranged periodically,
- a second graduation track (TS2; TS2') with second graduation structures (2.2) which are arranged periodically, and
- a third graduation track (TS3; TS3') with third graduation structures (2.3) which are arranged periodically, wherein

¬ the first graduation track (TS1; TS1') and the third graduation track (TS3; TS3') have an identical first number (n1, n3) of graduation structures (2.1, 2.3), while the second graduation track (TS2; TS2') has a second number (n2) of graduation structures (2.2) which is different from the first number (n1, n3), over a predetermined angular range,
¬ the graduation tracks (TS1, TS2, TS3; TS1', TS2', TS3') are arranged in a manner encircling concentrically around an axis (A), so that the first graduation track (TS1, TS1') is arranged radially on the inside, the second graduation track (TS2; TS2') is arranged radially between the first graduation track (TS1; TS1') and the third graduation track (TS3; TS3'), and the third graduation track (TS3; TS3') is arranged radially on the outside,

the scanning element (1) has

- an exciter line (1.4) and
- a first receiver conductor track (1.1),
- a second receiver conductor track (1.2) and
- a third receiver conductor track (1.3), wherein

¬ the first graduation track (TS1; TS1') can be scanned by the first receiver conductor track (1.1) in order to generate a first signal (S1) with an angle-related first signal period ($\Sigma$1),
¬ the second graduation track (TS2; TS2') can be scanned by the second receiver conductor track (1.2) in order to generate a second signal (S2) with an angle-related second signal period ($\Sigma$2), and
¬ the third graduation track (TS3; TS3') can be scanned by the third receiver conductor track (1.3) in order to generate a third signal (S3) with an angle-related third signal period ($\Sigma$3), wherein

the first graduation track (TS1; TS1') has a first radial extent (H1) and the third graduation track (TS3; TS3') has a third radial extent (H3), wherein the first radial extent (H1) is greater than the third radial extent (H3) and the first signal period ($\Sigma$1) is equal to the third signal period ($\Sigma$3) and an overall signal (SM) can be generated from the first signal (S1) and the third signal (S3) and can be combined with the second signal (S2) in order to determine an item of absolute angular position information.

2. Inductive angle measuring device according to the preceding claim, wherein the first graduation track (TS1; TS1'), in the circumferential direction, is arranged with a phase offset of greater than 150° and less than 210° relative to the third graduation track (TS3; TS3').

3. Inductive angle measuring device according to either of the preceding claims, wherein the angle measuring device has an analog circuit by way of which the overall signal (SM) can be generated by linking the first signal (S1) and the third signal (S3).

4. Inductive angle measuring device according to one of the preceding claims, wherein the first signal (S1) and the third signal (S3) are linked to one another by an addition or subtraction operation in order to form the overall signal (SM).

5. Inductive angle measuring device according to one of the preceding claims, wherein the angle measuring device has a further circuit by way of which absolute angular position information can be generated from the overall signal (SM) and the second signal (S2) using a Nonius method.

6. Inductive angle measuring device according to Claim 5, wherein the further circuit is configured as a digital circuit.

7. Inductive angle measuring device according to one of the preceding claims, wherein the scanning element (1) comprises a radially inner first scanning track (TA1) and a radially outer third scanning track (TA3), wherein

the first scanning track (TA1) comprises

- the first receiver conductor track (1.1), and
- at least one section (1.41, 1.42) of the exciter line (1.4), which section is arranged at an effective first radial distance (G1) from the first receiver conductor track (1.1), and

the third scanning track (TA3) comprises

- the third receiver conductor track (1.3) and
- at least one section (1.43, 1.44) of the exciter line (1.4), which section is arranged at an effective third radial distance (G3) from the third receiver conductor track (1.3), wherein the first effective radial distance (G1) is greater than the third effective radial distance (G3).

8. Inductive angle measuring device according to one of the preceding claims, wherein the second signal period ($\Sigma2$) is greater than the first signal period ($\Sigma1$) or the third signal period ($\Sigma3$).

9. Inductive angle measuring device according to one of the preceding claims, wherein the scale element (2') is configured such that

   - the first graduation track (TS1') runs along a first arc of a circle and has a first radial centre line (M1') with a first radius (r1'),
   - the second graduation track (TS2') runs along a second arc of a circle and has a second radial centre line (M2') with a second radius (r2'), and
   - the third graduation track (TS3') runs along a third arc of a circle and has a third radial centre line (M3') with a third radius (r3'), wherein:

   $$(r2' - r1') \neq (r3' - r2').$$

10. Inductive angle measuring device according to Claim 9, wherein:

    $$(r2' - r1') < (r3' - r2').$$

11. Inductive angle measuring device according to one of the preceding claims, wherein the scanning element (1) is configured such that the scale element (2; 2') can be scanned only over at least one segment by the said scanning element (1).

12. Inductive angle measuring device according to Claim 11, wherein the at least one segment extends over an angle ($\alpha$) which is smaller than 180°, in particular smaller than 120°.

13. Inductive angle measuring device according to one of the preceding claims, wherein the first receiver conductor track (1.1) has an angle-related first period ($\Pi1$) and the third receiver line conductor track (1.3) has an angle-related third period ($\Pi3$), wherein the scanning element (1) is configured such that the first period ($\Pi1$) is equal to the third period ($\Pi3$).

14. Inductive angle measuring device according to Claim 13, wherein the second receiver conductor track (1.2) has an angle-related second period ($\Pi2$), wherein the scanning element (1) is configured such that the second period ($\Pi2$) is greater than the first period ($\Pi1$).

**Revendications**

1. Dispositif de mesure d'angle par induction qui comporte un élément de balayage (1) et un élément d'échelle (2 ; 2'),

   l'élément d'échelle (2 ; 2') comprenant

      - une première piste de graduation (TS1 ; TS1') pourvue de premières structures de graduation (2.1) qui sont disposées de manière périodique,
      - une deuxième piste de graduation (TS2 ; TS2') pourvue de deuxièmes structures de graduation (2.2) qui sont disposées de manière périodique, et
      - une troisième piste de graduation (TS3 ; TS3') pourvue de troisièmes structures de graduation (2.3) qui sont disposées de manière périodique,

         - la première piste de graduation (TS1 ; TS1') et la troisième piste de graduation (TS3 ; TS3') comportant le même premier nombre (n1, n3) de structures de graduation (2.1, 2.3) sur une plage angulaire prédéterminée, tandis que la deuxième piste de graduation (TS2 ; TS2') comporte un deuxième nombre (n2) de structures de graduation (2.2) différent du premier nombre (n1, n3),
         - les pistes de graduation (TS1, TS2, TS3 ; TS1', TS2', TS3') étant disposées circonférentiellement concentriquement autour d'un axe (A) de sorte que la première piste de graduation (TS1 ; TS1') soit disposée radialement à l'intérieur, la deuxième piste de graduation (TS2 ; TS2') soit disposée radialement entre la première piste de graduation (TS1 ; TS1') et la troisième piste de graduation (TS3 ; TS3') et la troisième piste de graduation (TS3 ; TS3') soit disposée radialement à l'extérieur,

   l'élément de balayage (1) comportant

      - une ligne d'excitation (1.4) et
      - une première voie conductrice de réception (1.1),
      - une deuxième voie conductrice de réception (1.2) et
      - une troisième voie conductrice de réception (1.3),

         - la première piste de graduation (TS1 ; TS1') pouvant être balayée par la première voie conductrice de réception (1.1) afin de générer un premier signal (S1) ayant une première période de signal ($\Sigma$1) liée à l'angle,

- la deuxième piste de graduation (TS2 ; TS2') pouvant être balayée par la deuxième voie conductrice de réception (1.2) afin de générer un deuxième signal (S2) ayant une deuxième période de signal ($\Sigma$2) liée à l'angle, et

- la troisième piste de graduation (TS3 ; TS3') pouvant être balayée par la troisième voie conductrice de réception (1.3) afin de générer un troisième signal (S3) ayant une troisième période de signal (L3) liée à l'angle,

la première piste de graduation (TS1 ; TS1') ayant une première étendue radiale (H1) et la troisième piste de graduation (TS3 ; TS3') ayant une troisième étendue radiale (H3), la première étendue radiale (H1) étant supérieure à la troisième étendue radiale (H3) et la première période de signal ($\Sigma$1) étant égale à la troisième période de signal ($\Sigma$3) et un signal total (SM) pouvant être généré à partir du premier signal (S1) et du troisième signal (S3) et pouvant être combiné au deuxième signal (S2) pour déterminer une information de position angulaire absolue.

2. Dispositif de mesure d'angle par induction selon la revendication précédente, la première piste de graduation (TS1 ; TS1') étant disposée dans la direction circonférentielle avec un déphasage supérieur à 150° et inférieur à 210° par rapport à la troisième piste de graduation (TS3 ; TS3').

3. Dispositif de mesure d'angle par induction selon l'une des revendications précédentes, le dispositif de mesure d'angle comportant un circuit analogique qui permet de générer le signal total (SM) en combinant les premier et troisième signaux (S1, S3).

4. Dispositif de mesure d'angle par induction selon l'une des revendications précédentes, le premier signal (S1) et le troisième signal (S3) étant combinés l'un à l'autre par une opération d'addition ou de soustraction pour former le signal total (SM).

5. Dispositif de mesure d'angle par induction selon l'une des revendications précédentes, le dispositif de mesure d'angle comportant un autre circuit qui permet de générer une information de position angulaire absolue à partir du signal total (SM) et du deuxième signal (S2) en utilisant une méthode sur vernier.

6. Dispositif de mesure d'angle par induction selon la revendication 5, l'autre circuit étant conçu comme un circuit numérique.

7. Dispositif de mesure d'angle par induction selon l'une des revendications précédentes, l'élément de balayage (1) comprenant une première piste de balayage radialement intérieure (TA1) et une troisième piste de balayage radialement extérieure (TA3),

la première piste de balayage (TA1) comprenant

- la première voie conductrice de réception (1.1), ainsi que
- au moins une portion (1.41, 1.42) de la ligne d'excitation (1.4) qui est disposée à une première distance radiale effective (G1) de la première voie conductrice de réception (1.1), et

la troisième piste de balayage (TA3) comprenant

- la troisième voie conductrice de réception (1.3), ainsi que
- au moins une portion (1.43, 1.44) de la ligne d'excitation (1.4) qui est disposée à une troisième distance radiale effective (G3) de la troisième voie conductrice de réception (1.3), la première distance radiale effective (G1) étant supérieure à la troisième distance radiale effective (G3).

8. Dispositif de mesure d'angle par induction selon l'une des revendications précédentes, la deuxième période de signal ($\Sigma$2) étant supérieure à la première période de signal ($\Sigma$1) ou à la troisième période de signal ($\Sigma$3).

9. Dispositif de mesure d'angle par induction selon l'une des revendications précédentes, l'élément d'échelle (2') étant conçu de telle sorte que

- la première piste de graduation (TS1') s'étend le long d'un premier arc de cercle et comporte une première ligne médiane radiale (M1') ayant un premier rayon (r1'),
- la deuxième piste de graduation (TS2') s'étend le long d'un deuxième arc de cercle et comporte un deuxième ligne médiane radiale (M2') ayant un deuxième rayon (r2') et
- la troisième piste de graduation (TS3') s'étend le long d'un troisième arc de cercle et comporte une troisième ligne médiane radiale (M3') ayant un troisième rayon (r3'), avec

$$(r2' - r1') \neq (r3' - r2').$$

**10.** Dispositif de mesure d'angle par induction selon la revendication 9,

$$(r2' - r1') < (r3' - r2').$$

**11.** Dispositif de mesure d'angle par induction selon l'une des revendications précédentes, l'élément de balayage (1) étant conçu de telle sorte que l'élément d'échelle (2 ; 2') ne peut être balayé que sur au moins un segment.

**12.** Dispositif de mesure d'angle par induction selon la revendication 11, l'au moins un segment s'étendant sur un angle ($\alpha$) inférieur à 180°, en particulier inférieur à 120°.

**13.** Dispositif de mesure d'angle par induction selon l'une des revendications précédentes, la première voie conductrice de réception (1.1) ayant une première période ($\Pi1$) liée à l'angle et la troisième voie conductrice de réception (1.3) ayant une troisième période ($\Pi3$) liée à l'angle, l'élément de balayage (1) étant conçu de telle sorte que la première période ($\Pi1$) soit égale à la troisième période ($\Pi3$).

**14.** Dispositif de mesure d'angle par induction selon la revendication 13, la deuxième voie conductrice de réception (1.2) ayant une deuxième période ($\Pi2$) liée à l'angle, l'élément de balayage (1) étant conçu de telle sorte que la deuxième période (112) est supérieure à la première période ($\Pi1$).

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013218768 A1